# EUROPÄISCHE PATENTSCHRIFT

(11) **EP 4 006 501 B1**
(45) Veröffentlichungstag und Bekanntmachung des Hinweises auf die Patenterteilung: **30.10.2024**
(21) Anmeldenummer: 21206397.8
(22) Anmeldetag: 04.11.2021
(51) Int. Cl.: G01F 23/292

(54) **VORRICHTUNG UND VERFAHREN ZUR FÜLLSTANDÜBERWACHUNG**
DEVICE AND METHOD FOR MONITORING FILL LEVEL
DISPOSITIF ET PROCÉDÉ DE SURVEILLANCE DE NIVEAU DE REMPLISSAGE

(30) Priorität: 26.11.2020 DE 102020131355
(43) Veröffentlichungstag der Anmeldung: 01.06.2022
(73) Patentinhaber: KRONES AG, 93073 Neutraubling (DE)
(72) Erfinder: EHRISMANN, Tobias, 93073 Neutraubling (DE); SEEBAUER, Verena, 93073 Neutraubling (DE)
(74) Vertreter: v. Bezold & Partner Patentanwälte - PartG mbB

(56) Entgegenhaltungen:
- WO-A1-02/084229
- DE-A1- 102006 019 518
- DE-A1- 3 143 860
- DE-C1- 19 800 131
- GB-A- 1 285 201
- US-A- 3 094 213
- US-A1- 2012 314 059

## Beschreibung

### Technisches Gebiet

Die Erfindung betrifft eine Vorrichtung und ein Verfahren zur Füllstandüberwachung von Behältern für eine Behälterbehandlungsanlage.

### Technischer Hintergrund

In Fülleinrichtungen von Behälterbehandlungsanlagen können Produkte beispielsweise per Höhenfüllung abgefüllt werden, z. B. Bier in Glasbehältern. Beispielsweise erfolgt die Füllbegrenzung bei der Höhenfüllung durch eine Kurzschlusssonde. Die Kurzschlusssonde kann ein Metallröhrchen mit etwa 100 mm Länge aufweisen, das aus dem Füllventil ragt. Beim Füllprozess kann der zu füllenden Behälter nach oben gehoben und an das Füllventil angepresst werden. Erreicht das Produkt (die Flüssigkeit) die Kurzschlusssonde, wird ein elektrisches Signal ausgelöst, welches den Füllprozess beendet. Anschließend kann der Behälter wieder abgesenkt werden.

Nachteilig an dieser Technik kann die Notwendigkeit einer großen Hubbewegung der Behälter (>100 mm) beim Füllen aufgrund der Länge der Kurzschlusssonde sein. Auch für die CIP-Reinigung ("cleaning-in-place") kann dies ein großes Problem darstellen. Aufgrund der langen Kurzschlusssonden müssen auch die CIP-Kappen extrem lang sein und können nicht - wie im Standardfall - eingeschwenkt werden, sondern müssen eine Kombination aus Schwenk- und Hubbewegung durchführen. Auch dies ist mechanisch sehr komplex. Ein weiterer Nachteil der Kurzschlusssonde ist die Gefahr der Verschleppung von Verunreinigungen. Da die Sonde bei jedem Füllstopp Kontakt mit dem Produkt des jeweiligen Behälters hat, ist es möglich, Keime von einem kontaminierten Behälter in andere, noch saubere Behälter, zu übertragen.

Die DE 10118 323 A1 offenbart eine Vorrichtung zur Kontrolle des Füllstandes von bewegten, transparenten Behältern, mit mindestens einer lichtempfindlichen Sensoreinheit, einer auf die Sensoreinheit gerichteten Lichtquelle und einer Auswerteeinrichtung für Sensorsignale der Sensoreinheit. Die Sensoreinheit erzeugt Sensorsignale, die von der Position eines Lichtstrahls auf der Sensoreinheit abhängen. Die Auswerteeinrichtung ermittelt aus der zeitlichen Abfolge der Sensorsignale, ob der Lichtstrahl durch einen mit Füllgut gefüllten Behälter abgelenkt wurde.

Die GB 1 285 201 A offenbart eine Flaschensortiervorrichtung zum Erkennen von falsch gefüllten transparenten Flaschen oder Behältern. Die Flaschensortiervorrichtung umfasst einen Projektor, der einen Lichtstrahl projiziert, der auf eine Flasche oder einen Behälter in einer vorbestimmten Höhe auftrifft, und eine hinter der Flasche oder dem Behälter angebrachte fotoelektrische Vorrichtung. Die fotoelektrische Vorrichtung weist einen aktiven Bereich auf, dessen äußerer Rand den Strahl gerade nicht abfängt, wenn der Behälter nicht bis zu der vorbestimmten Höhe gefüllt ist. Die Fläche ist groß genug, damit der Strahl immer auf sie trifft, wenn der Behälter über den vorbestimmten Füllstand gefüllt ist. Eine rotierende Scheibe, die einen Schlitz aufweist, ermöglicht es dem Detektor, zwischen Umgebungslicht und dem von der Flasche gebrochenen Licht zu unterscheiden.

Die DE 10 2006 019518 A1 offenbart eine Vorrichtung und ein Verfahren zum Befüllen von Behältnissen, mit zumindest einer Fülleinrichtung, die über eine Füllnadel Flüssigkeit zu zumindest einem zu befüllenden Behältnis zuführt. Die Füllnadel wird zum kompletten Befüllen des Behältnisses verwendet. Eine Sensoreinrichtung ist zur Überwachung des Füllstandes der dem Behältnis zugeführten Flüssigkeit vorgesehen. Die Fülleinrichtung ist in Abhängigkeit von zumindest einem Ausgangssignal der Sensoreinrichtung angesteuert. Eine Antriebsvorrichtung ist vorgesehen, die die Füllnadel während des Füllvorgangs bewegt.

Die US 3 094 213 A offenbart ein weiteres System zur Feststellung, ob eine Flasche, die eine Inspektionszone durchläuft, ordnungsgemäß mit einer Flüssigkeit gefüllt wurde.

Die DE 10 2018 133 602 A1 offenbart eine Kontrollvorrichtung zum Bestimmen eines Füllstandes eines mit einer Flüssigkeit zu befüllenden Behälters, insbesondere für eine Getränkeabfüllanlage. Die Vorrichtung umfasst eine Sendeeinheit zum Emittieren wenigstens eines den Behälter durchdringenden Messstrahls und eine dieser zugeordnete, den Messstrahl empfangende Empfangseinheit. Die Sendeeinheit emittiert den Messstrahl in einer aufsteigenden, relativ zu einer Grenzfläche zwischen der Flüssigkeit und einer in dem Behälter darüber angeordneten Gasschicht geneigten Richtung. Die Sendeeinheit und die Empfangseinheit sind derart angeordnet und dazu eingerichtet, dass in einem einen gewünschten Füllstand aufweisenden Zustand des Behälters der von der Sendeeinheit emittierte Messstrahl die Flüssigkeit in dem Behälter durchquert und derart auf die Grenzfläche auftrifft, dass die Grenzfläche den Messstrahl in eine von der Empfangseinheit abgelenkte Richtung reflektiert.

Der Erfindung liegt die Aufgabe zu Grunde, eine verbesserte Füllstandüberwachung für eine Behälterbehandlungsanlage zu schaffen, vorzugsweise hinsichtlich Funktionalität, Zuverlässigkeit und/oder Konstruktion.

### Zusammenfassung der Erfindung

Die Aufgabe wird gelöst durch die Merkmale des unabhängigen Anspruchs 1. Vorteilhafte Weiterbildungen sind in den abhängigen Ansprüchen und der Beschreibung angegeben.

Ein Aspekt der vorliegenden Offenbarung betrifft eine Vorrichtung zur Füllstandüberwachung von Behältern für eine Behälterbehandlungsanlage (z. B. zum Herstellen, Reinigen, Prüfen, Abfüllen, Verschließen, Etikettieren, Bedrucken und/oder Verpacken von Behältern für flüssige Medien, vorzugsweise Getränke oder flüssige Nahrungsmittel). Die Vorrichtung weist eine Behälteraufnahme zum Aufnehmen eines Behälters auf. Die Vorrichtung weist eine Fülleinrichtung (z. B. aufweisend ein Füllventil), die zum Befüllen (z. B. Druckabfüllen) eines in der Behälteraufnahme aufgenommenen Behälters mit einer Flüssigkeit angeordnet ist. Die Vorrichtung weist eine (z. B. punktförmige) Lichtquelle (z. B. Laser-Lichtquelle, LED-Lichtquelle, UV-Lichtquelle oder Infrarot-Lichtquelle) zum Ausstrahlen eines Lichtstrahls zum Passieren (bzw. Durchqueren, Hindurchtreten oder Durchstrahlen) eines in der Behälteraufnahme aufgenommenen Behälters auf. Die Vorrichtung weist einen lichtempfindlichen Sensor (z. B. aufweisend eine Fotodiode, einen Fotowiderstand, einen Fototransistor, einen CCD-Sensor und/oder einen CMOS-Sensor) auf, der angeordnet ist, den Lichtstrahl nur dann zu empfangen, wenn die Flüssigkeit in dem Behälter einen Füllstand (z. B. auf Höhe der Lichtquelle, des Sensors und/oder des Lichtstrahls) hat, bei dem der Lichtstrahl beim Passieren (bzw. Durchqueren, Hindurchtreten oder Durchstrahlen) des Behälters durch die Flüssigkeit in dem Behälter gebrochen wurde.

Vorteilhaft kann nur eine vollständig ausgebildete Flüssigkeitslinse eine Ablenkung des Lichtstrahlstrahles bewirken, die groß genug ist, um den Sensor zu erreichen. Andere typische Fehlerquellen bei optischen Messmethoden können ausgeschlossen oder zumindest wesentlich abgemildert werden. Beispielsweise kann ein Einfluss von Flüssigkeitstropfen in oder an dem Behälter verringert oder ausgeschlossen werden. Die Flüssigkeitstropfen bewirken lediglich eine sehr kleine Parallelverschiebung des Lichtstrahles. Somit kann ein fälschlicherweise ausgelöster Füllstopp ausgeschlossen werden. Die Behälterwand und bei Wandfüllung ein Flüssigkeitsfilm an der Behälterinnenseite erzeugen lediglich eine minimale Lichtbrechung. Der gebrochene Lichtstrahl wird jedoch nicht so stark gebrochen, dass er den Sensor erreichen kann. Dies ist so lange der Fall, bis durch den Füllprozess der Flüssigkeitsspiegel (der Füllstand) eine Höhe der Lichtquelle erreicht hat. Dann wird der Lichtstrahl durch die entstandene Flüssigkeitslinse im Behälter so stark gebrochen, dass der Sensor getroffen wird. Der Sensor kann - ähnlich der Kurzschlusssonde - bspw. ein elektrisches Signal senden, das den Füllprozess beendet.

Die Vorrichtung kann vorzugsweise eine ganze Reihe von Vorteilen gegenüber herkömmlichen Systemen bieten. Die Füllstandmessung kann nichtinvasiv sein, wodurch die Hygiene verbessert werden kann, z. B. durch Verhinderung einer Produkt- oder Keimverschleppung. Die Mechanik kann z. B. im Vergleich zu Füllanlagen mit Kurzschlusssonde, deutlich vereinfacht werden, insbesondere bezüglich CIP-Kappen und einem Grundaufbau der Behälteraufnahme zum Ermöglichen eines Hubs der Behälter. Durch die Ermöglichung des verringerten Hubs kann die Abfüllung insgesamt verkürzt werden. Beispielsweise kann bei einem Füllerkarussell eine Prozesswinkeleinsparung durch den verkürzten Hub ermöglicht werden, sodass eine höhere Leistung bei gleichem Teilkreis bzw. ein kleinerer Füller bei gegebener Leistung möglich ist. Es besteht keine Beeinflussung durch Schaum, da dieser oberhalb des Flüssigkeitsspeigels schwimmt. Die Füllstandmessung ist auch bei der Abfüllung von CSD-Produkten ("carbonated soft drinks") einsetzbar. Da die Füllstandmessung berührungslos erfolgt, ist sie auch drahtbruchsicher. Es kann auch eine Freistrahlfüllung ermöglicht werden, da die Kurzschlusssonde wegfallen kann. Letztlich können sich auch Kostenvorteile ergeben, insbesondere gegenüber der Verwendung einer Kurzschlusssonde.

Vorzugsweise kann die Behälteraufnahme vertikal bewegbar sein, sodass ein in der Behälteraufnahme aufgenommener Behälter mit dessen Füllöffnung gegen die Fülleinrichtung gepresst werden kann, vorzugsweise zum Ermöglichen einer Druckabfüllung mittels der Fülleinrichtung.

In einem Ausführungsbeispiel weist die Vorrichtung eine (z. B. lösbar angebrachte) Abdeckung auf, die einen Abschnitt einer lichtempfindlichen Sensorfläche des lichtempfindlichen Sensors verdeckt (z. B. abschattet). Vorteilhaft kann so statt einer Speziallösung für den lichtempfindlichen Sensor mit einer kleinen Sensorfläche auf ein kostengünstiges (großes) Standardformat für den Sensor zurückgegriffen werden. Die nicht benötige Sensorfläche kann einfach durch die Abdeckung verdeckt werden, sodass ausgeschlossen werden kann, dass es in diesem Bereich zu Fehlerfassungen, z. B. aufgrund von Reflexionen oder Umgebungslicht, kommt. Bevorzugt kann die Abdeckung und der großformatige Sensor auch die Verwendung der Vorrichtung bei unterschiedlichen Behälterformaten und/oder unterschiedlich gewünschten Füllhöhen ermöglichen, für die jeweils unterschiedliche Abdeckungen existieren können oder die Abdeckung verstellt werden kann.

Vorzugsweise kann die Abdeckung zwischen der Behälteraufnahme und dem Sensor angeordnet sein.

In einem weiteren Ausführungsbeispiel ist die Abdeckung zum Verändern des verdeckten Abschnitts verstellbar, vorzugsweise bewegbar. Vorteilhaft kann somit mittels einer einzigen Abdeckung unterschiedliche Bereiche der Sensorfläche des Sensors freigegeben werden, wodurch bspw. die Einstellung unterschiedlicher gewünschter Füllhöhen und die Verwendung unterschiedlicher Behälter ermöglicht werden kann.

In einem weiteren Ausführungsbeispiel weist die Abdeckung eine erste Scheibe (z. B. Außenscheibe) auf, die drehbar gelagert ist und ein erstes Durchgangsloch, das exzentrisch in der ersten Scheibe angeordnet ist, aufweist. Die Abdeckung weist eine zweite Scheibe (z. B. Innenscheibe) auf, die drehbar in dem ersten Durchgangsloch gelagert ist und ein zweites Durchgangsloch, das exzentrisch in der zweiten Scheibe zum Durchlassen des Lichtstrahls angeordnet ist, aufweist. Vorteilhaft können die Scheiben jeweils gedreht werden, um eine Position des zweiten Durchgangslochs für den Lichtstrahl anzupassen. Damit kann vorteilhaft die Einstellung unterschiedlicher gewünschter Füllhöhen und die Verwendung unterschiedlicher Behälter ermöglicht werden kann.

In einer Ausführungsform weist die Vorrichtung eine (z. B. bruchsichere oder kratzunempfindliche) Lichtquellen-Schutzscheibe auf, die zwischen der Lichtquelle und der Behälteraufnahme angeordnet und zum Schützen der Lichtquelle vor Behälterbruchstücken bei einem Behälterbruch in der Behälteraufnahme ausgebildet ist. Vorteilhaft kann somit bei Behälterbrüchen, die insbesondere bei Druckabfüllungen auftreten können, verhindert werden, dass die Lichtquelle beschädigt wird und ausgetauscht werden muss.

In einer weiteren Ausführungsform weist die Vorrichtung eine (z. B. bruchsichere oder kratzunempfindliche) Sensor-Schutzscheibe auf, die zwischen dem lichtempfindlichen Sensor und der Behälteraufnahme angeordnet und zum Schützen des lichtempfindlichen Sensors vor Behälterbruchstücken bei einem Behälterbruch in der Behälteraufnahme ausgebildet ist. Vorteilhaft kann somit bei Behälterbrüchen, die insbesondere bei Druckabfüllungen auftreten können, verhindert werden, dass der Sensor beschädigt und ausgetauscht werden muss.

In einer Ausführungsvariante ist die Lichtquelle dazu ausgebildet, den Lichtstrahl in einem vorbestimmten Wellenlängenbereich auszustrahlen. Die Vorrichtung kann ferner einen optischen Filter, vorzugsweise Bandpassfilter und/oder Polarisationsfilter, aufweisen, der zwischen der Behälteraufnahme und dem lichtempfindlichen Sensor angeordnet und zum, vorzugsweise teilweisen oder vollständigen, Herausfiltern von einem Licht-Wellenlängenbereich außerhalb des vorbestimmten Wellenlängenbereichs ausgebildet ist. Bevorzugt kann somit eine fehlerhafte Füllstandmessung aufgrund von Umgebungslicht verhindert werden.

Vorzugsweise kann der optische Filter im Wesentlichen nur durchlässig für den vorbestimmten Wellenbereich des Lichtstrahls der Lichtquelle sein.

In einer weiteren Ausführungsvariante ist der optische Filter in der Abdeckung integriert (z. B. in dem zweiten Durchgangsloch davon angeordnet) und/oder in der Sensor-Schutzscheibe integriert. Vorteilhaft kann somit eine besonders bauraumgünstige Lösung geschaffen werden.

Gemäß der Erfindung ist die Lichtquelle und/oder der lichtempfindliche Sensor verstellbar, nämlich hin zu und weg von der Behälteraufnahme verschwenkbar.

In einem Ausführungsbeispiel ist die Lichtquelle und/oder der lichtempfindliche Sensor höhenverstellbar.

Vorzugsweise können so verschiedene gewünschte Füllhöhen eingestellt werden. Ebenfalls kann die Vorrichtung an unterschiedliche Behälterformate angepasst werden.

In einem weiteren Ausführungsbeispiel weist die Vorrichtung ein Grundgestell auf, das die Lichtquelle und/oder den lichtempfindlichen Sensor (gemeinsam) trägt. Vorteilhaft kann so eine montagefreundliche und bauraumgünstige Konstruktion bereitgestellt werden.

Es ist möglich, dass das Grundgestell ferner eine Behälterhalterung, vorzugsweise eine Behälterhalsklammer, zum Halten des Behälters in der Behälteraufnahme trägt. Alternativ oder zusätzlich kann die Vorrichtung bspw. einen Stützboden/eine Bodenplatte zum bodenseitigen Abstützen des Behälters aufweisen. Je nach Ausführung kann der Stützboden/die Bodenplatte von dem Grundgestell getragen sein oder nicht.

Vorzugsweise kann das Grundgestell ebenfalls den optischen Filter, die Abdeckung, die Sensor-Schutzscheibe und/oder die Lichtquellen-Schutzscheibe tragen, z. B. jeweils in einer jeweiligen Aufnahme des Grundgestells.

In einem weiteren Ausführungsbeispiel weist das Grundgestell einen ersten Außenschenkel, einen zweiten Außenschenkel und einen Mittelschenkel auf. Vorzugsweise können der erste Außenschenkel, der zweite Außenschenkel und der Mittelschenkel zusammen eine U-Form bilden. Es ist möglich, dass der lichtempfindliche Sensor an dem ersten Außenschenkel angeordnet ist und/oder die Lichtquelle an mindestens einem von dem zweiten Außenschenkel und dem Mittelschenkel angeordnet ist. Vorzugsweise kann somit die Montagefreundlichkeit sowie die bauraumgünstige Anordnung weiter verbessert werden.

Es ist möglich, dass die Behälterhalterung an dem Mittelschenkel angeordnet ist.

Beispielsweise können der erste Außenschenkel und der zweite Außenschenkel im Wesentlichen parallel verlaufen.

Vorzugsweise kann der optische Filter, die Sensor-Schutzscheibe und/oder die Abdeckung an dem ersten Außenschenkel angeordnet sein.

Bevorzugt kann die Lichtquellen-Schutzscheibe an dem zweiten Außenschenkel angeordnet sein.

In einem weiteren Ausführungsbeispiel ist der erste Außenschenkel und/oder der zweite Außenschenkel bewegbar, vorzugsweise verschwenkbar, mit dem Mittelschenkel verbunden. Vorzugsweise können so verschiedene gewünschte Füllhöhen eingestellt werden, und/oder die Vorrichtung kann an unterschiedliche Behälterformate angepasst werden.

In einer Ausführungsform weist die Vorrichtung ferner einen Umlenkspiegel auf, der angeordnet ist, den von der Lichtquelle ausgestrahlten Lichtstrahl in einer Richtung zu der Behälteraufnahme umzulenken, vorzugsweise in einem Bereich zwischen 30° und 150°, besonders bevorzugt um rd. 90°. Vorteilhaft kann der Umlenkspiegel die Möglichkeiten zur Anordnung der Lichtquelle deutlich erweitern, sodass dieser bspw. bauraumgünstiger oder montagefreundlicher angeordnet werden kann.

In einer weiteren Ausführungsform ist der Umlenkspiegel an dem zweiten Außenschenkel angeordnet ist und die Lichtquelle weist einen länglichen Körper auf, dessen Längsachse im Wesentlichen parallel zu einer Längsachse des zweiten Außenschenkels verläuft. Alternativ oder zusätzlich kann die Lichtquelle zumindest teilweise an dem Mittelschenkel angeordnet sein. Vorteilhaft kann so eine bauraumgünstige Anordnung der Lichtquelle erreicht werden.

Es ist möglich, dass die Vorrichtung ferner mindestens eine weitere Lichtquelle zum Ausstrahlen mindestens eines weiteren Lichtstrahls zum Passieren des in der Behälteraufnahme aufgenommenen Behälters aufweist, wobei die mindestens eine weitere Lichtquelle vertikal versetzt zu (z. B. oberhalb oder unterhalb von) der Lichtquelle angeordnet ist. Vorzugsweise kann der lichtempfindliche Sensor angeordnet sein, den mindestens einen weiteren Lichtstrahl nur dann zu empfangen, wenn die Flüssigkeit in dem Behälter einen Füllstand hat, bei dem der mindestens eine weitere Lichtstrahl beim Passieren des Behälters durch die Flüssigkeit in dem Behälter gebrochen wurde. Vorteilhaft können so mehrere Füllstandmesspunkte überprüft werden, z. B. bis hin zu einer quasikontinuierlichen Kontrolle der Höhenfüllung. Vorteilhaft können so auch unterschiedliche Füllhöhen für ein Schnellfüllen und ein Langsamfüllen festgelegt werden. Beispielsweise können die Lichtquellen als eine kontinuierliche Leiste an Lichtpunkten bzw. ein Lichtvorhang ausgeführt sein. Der Sensor kann zweckmäßig als ein vertikaler Sensorstreifen ausgeführt sein.

In einer weiteren Ausführungsvariante sind der lichtempfindliche Sensor und die Lichtquelle im Wesentlichen auf gleicher Höhe angeordnet, und/oder der lichtempfindliche Sensor und die Lichtquelle sind auf einander gegenüberliegenden Seiten der Behälteraufnahme angeordnet. Vorzugsweise können der Sensor und die Lichtquelle auf diese Weise besonders günstig zum Erfüllen ihrer jeweiligen Funktion angeordnet werden.

In einer weiteren Ausführungsvariante weist die Vorrichtung ferner eine Steuereinheit auf, die dazu ausgebildet ist, ein Befüllen des Behälters mittels der Fülleinrichtung zu beenden, wenn die Steuereinheit von dem lichtempfindlichen Sensor ein Signal empfängt, das angibt, dass der Lichtstrahl von dem lichtempfindlichen Sensor empfangen wurde.

Vorzugsweise kann sich der Begriff "Steuereinheit" auf eine Elektronik (z. B. mit Mikroprozessoren) und Datenspeicher) beziehen, die je nach Ausbildung Steuerungsaufgaben und/oder Regelungsaufgaben und/oder Verarbeitungsaufgaben übernehmen kann. Auch wenn hierin der Begriff "Steuern" verwendet wird, kann damit gleichsam zweckmäßig auch "Regeln" bzw. "Steuern mit Rückkopplung" und/oder "Verarbeiten" umfasst bzw. gemeint sein.

In einem Ausführungsbeispiel ist die Vorrichtung in einem Füllerkarussell zum Befüllen von Behältern umfasst. Bspw. kann das Füllerkarussell mehrere Vorrichtungen, wie hierin offenbart, aufweisen, die um einen Umfang des Füllerkarussells herum verteilt angeordnet sind.

Ein weiterer Aspekt der vorliegenden Offenbarung betrifft ein Verfahren zur Füllstandüberwachung von Behältern für eine Behälterbehandlungsanlage, vorzugsweise mittels einer Vorrichtung wie hierin offenbart. Das Verfahren weist ein Füllen (z. B. Druckbefüllen) eines Behälters mit einer Flüssigkeit (z. B. mittels einer Fülleinrichtung) auf. Das Verfahren weist ein Ausstrahlen eines Lichtstahls (z. B. mittels einer Lichtquelle), der den Behälter passiert, während des Füllens auf. Das Verfahren weist ein Empfangen des ausgestrahlten Lichtstahls mittels eines lichtempfindlichen Sensors nur dann, wenn die Flüssigkeit in dem Behälter einen Füllstand hat, bei dem der ausgestrahlte Lichtstrahl beim Passieren (bzw. Durchqueren, Hindurchtreten oder Durchstrahlen) des Behälters durch die Flüssigkeit in dem Behälter gebrochen wurde, während des Füllens auf. Das Verfahren weist ein Beenden des Füllens, wenn der ausgestrahlte Lichtstahl empfangen wurde, auf (z. B. mittels einer Steuereinheit). Vorteilhaft kann das Verfahren die gleichen Vorteile erzielen, die hierin bereits für die Vorrichtung beschrieben wurden. Dies gilt ebenso für die nachfolgend beschrieben bevorzugten Weiterbildungen des Verfahrens.

In einem Ausführungsbeispiel weist das Verfahren ferner ein Verdecken eines Abschnitts einer lichtempfindlichen Sensorfläche des lichtempfindlichen Sensors (z. B. mittels einer Abdeckung), und vorzugsweise ein Verändern des verdeckten Abschnitts (z. B. mittels einer Verstellbarkeit, vorzugsweise Bewegbarkeit, der Abdeckung) auf (z. B. vor und/oder während des Füllens).

In einem weiteren Ausführungsbeispiel weist das Verfahren ferner ein Schützen des lichtempfindlichen Sensors vor Behälterbruchstücken bei einem Behälterbruch des Behälters (z. B. mittels einer Schutzscheibe) auf (z. B. während des Füllens).

Vorzugsweise kann das Verfahren ferner ein Schützen der Lichtquelle vor Behälterbruchstücken bei einem Behälterbruch des Behälters (z. B. mittels einer Schutzscheibe) aufweisen (z. B. während des Füllens).

In einem weiteren Ausführungsbeispiel weist das Verfahren ferner ein Filtern von auf den lichtempfindlichen Sensor einstrahlendem Licht, wobei Licht-Wellenlängenbereiche, vorzugsweise teilweise oder vollständig, herausgefiltert werden, die außerhalb eines Wellenlängenbereichs des ausgestrahlten Lichtstrahls sind (z. B. mittels eines optischen Filters), auf (z. B. während des Füllens).

In einem weiteren Ausführungsbeispiel weist das Verfahren ferner ein Umlenken des ausgestrahlten Lichtstrahls mittels eines Umlenkspiegels vor dem Passieren des Behälters auf (z. B. während des Füllens).

Die zuvor beschriebenen bevorzugten Ausführungsformen und Merkmale der Erfindung sind beliebig miteinander kombinierbar.

### Kurzbeschreibung der Figuren

Weitere Einzelheiten und Vorteile der Erfindung werden im Folgenden unter Bezug auf die beigefügten Zeichnungen beschrieben. Es zeigen:
- Figur 1: eine schematische Seitenansicht einer Vorrichtung zur Füllstandüberwachung gemäß einem Ausführungsbeispiel der vorliegenden Offenbarung;
- Figur 2: eine schematische Schnittansicht der beispielhaften Vorrichtung von Figur 1 mit einem gefüllten Behälter;
- Figur 3: eine schematische Schnittansicht der beispielhaften Vorrichtung von Figur 1 mit einem ungefüllten Behälter;
- Figur 4: eine schematische Seitenansicht einer Vorrichtung zum Behandeln von Behältern gemäß einem weiteren Ausführungsbeispiel der vorliegenden Offenbarung;
- Figur 5: eine perspektivische Ansicht einer Vorrichtung mit einer Behälterhalterung und einer Füllstandüberwachung gemäß einem Ausführungsbeispiel der vorliegenden Offenbarung;
- Figur 6: eine weitere perspektivische Ansicht der beispielhaften Vorrichtung von Figur 5;
- Figur 7: eine perspektivische Ansicht eines beispielhaften Grundgestells;
- Figur 8: eine perspektivische Ansicht einer beispielhaften Baugruppe mit einer Abdeckung;
- Figur 9: eine weitere perspektivische Ansicht der beispielhaften Baugruppe;
- Figur 10: eine Schnittansicht durch die beispielhafte Baugruppe der Figuren 8 und 9; und
- Figur 11: eine perspektivische Ansicht einer Vorrichtung mit einer Behälterhalterung und einer Füllstandüberwachung gemäß einem weiteren Ausführungsbeispiel der vorliegenden Offenbarung.

Die in den Figuren gezeigten Ausführungsformen stimmen zumindest teilweise überein, so dass ähnliche oder identische Teile mit den gleichen Bezugszeichen versehen sind und zu deren Erläuterung auch auf die Beschreibung der anderen Ausführungsformen bzw. Figuren verwiesen wird, um Wiederholungen zu vermeiden.

### Detaillierte Beschreibung beispielhafter Ausführungsformen

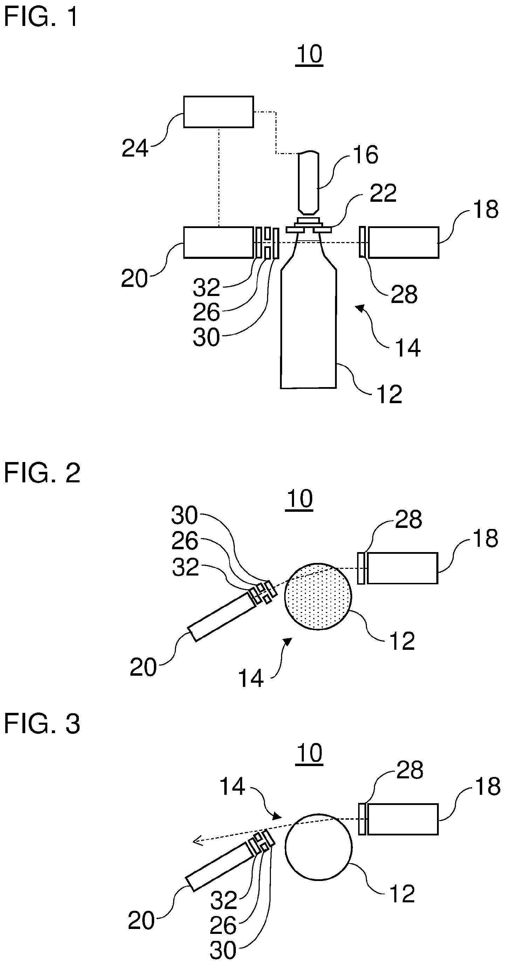

Figur 1 zeigt eine Vorrichtung 10. Die Vorrichtung 10 ermöglicht ein Befüllen und ein Überwachen eines Füllstands eines Behälters 12. Die Vorrichtung 10 kann beispielsweise in einer Behälterbehandlungsanlage, z. B. zum Herstellen, Reinigen, Prüfen, Abfüllen, Verschließen, Etikettieren, Bedrucken und/oder Verpacken von Behältern für flüssige Medien, vorzugsweise Getränke oder flüssige Nahrungsmittel, umfasst sein. Bevorzugt ist die Vorrichtung 10 ein Abschnitt eines Füllerkarussells, das um dessen Umfang verteilt mehrere der Vorrichtungen 10 aufweist.

Der Behälter 12 ist aus einem zumindest teilweise lichtdurchlässigen bzw. transparenten Material, zum Beispiel aus einem Kunststoff oder Glas, hergestellt. Der Behälter 12 weist bevorzugt einen lang gestreckten Halsbereich auf (zum Beispiel sog. Long-Neck-Flasche). Der Behälter 12 kann bevorzugt eine Flasche, zum Beispiel Glasflasche oder PET-Flasche, sein. Es ist allerdings auch möglich, dass der Behälter 12 anders ausgeführt ist, zum Beispiel als ein Kanister, ein Flakon oder ein Gefäß.

Die Vorrichtung 10 weist eine Behälteraufnahme 14, eine Fülleinrichtung 16, eine Lichtquelle 18 und einen lichtempfindlichen Sensor 20 auf.

Die Behälteraufnahme 14 ist ein Bereich bzw. ein Raum, in dem der Behälter 12 positionierbar ist. Der Behälter 12 kann vorzugsweise maschinell zu der Behälteraufnahme 14 zugeführt und/oder von der Behälteraufnahme 14 abgeführt werden. Die Zu- und Abführung kann beispielsweise mittels eines oder mehrerer Behälterförderer (nicht dargestellt) erfolgen.

Es ist möglich, dass der Behälter 12 in der Behälteraufnahme 14 mittels einer Behälterhalterung 22 gehalten ist. Die Behälterhalterung 22 kann vorzugsweise als eine (zum Beispiel aktive oder passive) Behälterhalsklammer zum Halten des Behälters 12 an einem Halsring bzw. Neckring des Behälters 12 ausgeführt sein (sogenanntes Neckhandling). Es ist allerdings auch möglich, dass die Behälterhalterung 22, sofern vorhanden, anders ausgeführt ist und den Behälter 12 beispielsweise an dessen Boden z. B. in Form eines Stützbodens/einer Bodenplatte abstützt und/oder an dessen Basis hält.

Die Fülleinrichtung 16 ist oberhalb von der Behälteraufnahme 14 angeordnet. Die Fülleinrichtung 16 ist dazu ausgebildet, den in der Behälteraufnahme 14 positionierten Behälter 12 zu befüllen. Die Fülleinrichtung 16 kann beispielsweise ein Füllventil aufweisen. Der Behälter 12 kann von der Fülleinrichtung 16 mittels Höhenfüllung abgefüllt werden. Bei der Höhenfüllung werden nacheinander folgende Behälter 12 stets mit dem gleichen Füllstand befüllt, auch wenn die Füllvolumina dabei unterschiedlich sein können.

Es ist möglich, dass die Fülleinrichtung 16 dazu ausgebildet ist, den Behälter 12 mittels einer Druckbefüllung (zum Beispiel mit einem Fülldruck von 5 bar oder mehr) zu befüllen. Die Fülleinrichtung 16 kann druckdicht mit einer Behälteröffnung des Behälters 12 verbunden werden. Beispielsweise kann der Behälter 12 von unten gegen die Fülleinrichtung 16 gedrückt werden, zum Beispiel mittels einer Hubeinrichtung, wie beispielsweise eines Hubtisches. Die Fülleinrichtung 16 kann mit einem Tank (zum Beispiel Drucktank) verbunden sein. Aus dem Tank kann die Flüssigkeit zum Befüllen des Behälters 12 zu der Fülleinrichtung 16 zugeführt werden.

Die Lichtquelle 18 ist seitlich neben der Behälteraufnahme 14 angeordnet, vorzugsweise außermittig bezüglich der Behälteraufnahme 14 und/oder des Behälters 12. Die Lichtquelle 18 kann einen Lichtstrahl ausstrahlen. Der Lichtstrahl kann direkt zu der Behälteraufnahme 14 ausgestrahlt werden oder mittels mindestens eines Umlenkspiegels zu der Behälteraufnahme 14 umgelenkt werden. Der Lichtstrahl von der Lichtquelle 18 trifft den Behälter 12 in der Behälteraufnahme 14 vorzugsweise in Richtung einer Sekante, die nicht durch die Mittelachse des Behälters 12 geht. Die Lichtquelle 18 kann beispielsweise eine Laser-Lichtquelle, LED-Lichtquelle, UV-Lichtquelle oder Infrarot-Lichtquelle sein. Die Lichtquelle 18 kann Licht in einem vorbestimmten Wellenlängenbereich ausstrahlen. Die Lichtquelle 18 ist bevorzugt eine punktförmige Lichtquelle.

Es ist möglich, dass die Lichtquelle 18 verstellbar angeordnet ist. Beispielsweise kann die Lichtquelle 18 höhenverstellbar sein. Alternativ oder zusätzlich kann die Lichtquelle 18 zu der Behälteraufnahme 14 hinbewegt und von der Behälteraufnahme 14 wegbewegt werden, zum Beispiel mittels Verschwenken und/oder Verschieben der Lichtquelle 18.

Der lichtempfindlichen Sensor 20 ist seitlich neben der Behälteraufnahme 14 angeordnet, vorzugsweise außermittig bezüglich der Behälteraufnahme 14 und/oder des Behälters 12. Der Sensor 20 kann bevorzugt auf einer der Lichtquelle 18 gegenüberliegenden Seite der Behälteraufnahme 14 angeordnet sein. Bevorzugt sind der Sensor 20 und die Lichtquelle 18 auf gleicher Höhe angeordnet. Bevorzugt sind der Sensor 20 und die Lichtquelle 18 auf einer Behälterhalshöhe des Behälters 12 in der Behälteraufnahme 14 angeordnet. Der Sensor 20 ist dazu ausgebildet, bei Empfang eines Lichtstrahls auf dessen lichtempfindlicher Sensorfläche ein Signal auszugeben.

Die Figuren 2 und 3 zeigen eine relative Anordnung der Behälteraufnahme 14, der Lichtquelle 18 und des Sensors 20 zueinander. Im Einzelnen zeigt die Figur 2 den Behälter 12 mit einem Füllstand, der auf Höhe oder oberhalb von einem Durchgang des Lichtstrahls von der Lichtquelle 18 durch den Behälter 12 positioniert ist. Die Figur 3 zeigt den Behälter 12 mit einem Füllstand, der unterhalb von einem Durchgang des Lichtstrahls von der Lichtquelle 18 durch den Behälter 12 positioniert ist.

Der Vergleich der Figuren 2 und 3 zeigt, dass der Sensor 20 den von der Lichtquelle 18 abgegebenen Lichtstrahl nur empfängt, wenn der Lichtstrahl den Behälter 12 in der Behälteraufnahme 14 passiert und dabei die Flüssigkeit in dem Behälter 12 den Lichtstrahl bricht. Die Flüssigkeit in dem Behälter 12 kann somit eine Flüssigkeitslinse zum Brechen des Lichtstrahls bilden (siehe Figur 2). Das heißt, nur dann, wenn in dem Behälter 12 ein Füllstand erreicht ist, bei dem der Lichtstrahl durch die Flüssigkeit in dem Behälter 12 gebrochen wird, kann der Lichtstrahl den Sensor 20 erreichen. Die Flüssigkeit in dem Behälter 12 bricht den Lichtstrahl in einer Richtung zu dem Sensor 20. Wenn der Behälter 12 ungefüllt ist oder einen zu niedrigen Füllstand aufweist, wird der Lichtstrahl nicht durch die Flüssigkeit in dem Behälter 12 gebrochen, sodass der Lichtstrahl den Sensor 20 nicht erreicht (siehe Figur 3).

Der Sensor 20 kann während des Befüllens des Behälters 12 mittels der Fülleinrichtung 16 dann ein Signal ausgeben, wenn der Lichtstrahl von der Lichtquelle 18 empfangen wurde. Zu diesem Zeitpunkt kann somit ein Füllstand der Flüssigkeit in dem Behälter 12 ermittelt werden. Das Signal des Sensors 20 kann bevorzugt dazu verwendet werden, das Befüllen des Behälters 12 zu beenden.

Der Sensor 20 kann bspw. einen Fotowiderstand, eine Fotodiode, einen Fototransistor, einen CCD-Sensor und/oder einen CMOS-Sensor aufweisen.

Es ist möglich, dass die Behälteraufnahme 14 sich während des Befüllens des Behälters 12 bewegt, z. B. auf einer Kreisbahn einer Drehbewegung eines Füllerkarussells. Der Sensor 20 und/oder die Lichtquelle 18 können sich mit der Behälteraufnahme 14 mitbewegen. Alternativ kann der Sensor 20 und/oder die Lichtquelle 18 stationär sein, z. B. auch, wenn sich die Behälteraufnahme 14 während des Füllens bewegt. Mittels des stationäres Sensors 20 könnte nacheinander ein Füllstand mehrerer Behälter in mehreren Behälteraufnahmen kontrolliert werden. Es ist auch möglich, dass die Behälteraufnahme 14 stationär ist.

Unter Bezugnahme auf die Figuren 1 bis 3 kann die Vorrichtung 10 ferner eine Steuereinheit 24 (siehe Figur 1), eine Abdeckung 26, eine Lichtquellen-Schutzscheibe 28, eine Sensor-Schutzscheibe 30 und/oder einen optischen Filter 32 aufweisen, wenn gewünscht.

Die Steuereinheit 24 kann in Kommunikationsverbindung mit der Fülleinrichtung 16 und dem Sensor 20 sein. Die Steuereinheit 24 kann die Fülleinrichtung 16 basierend auf einem von dem Sensor 20 empfangenen Signal betreiben. Beispielsweise kann die Steuereinheit 24 die Fülleinrichtung 16 zum Beenden des Befüllens des Behälters 12 betreiben, wenn die Steuereinheit 24 ein Signal von dem Sensor 20 empfängt, das angibt, dass die gewünschte Füllhöhe des Behälters 12 erreicht wurde oder in Kürze erreicht wird. Damit kann beispielsweise die bereits erläuterte Höhenfüllung des Behälters 12 ermöglicht werden.

Die Abdeckung 26 ist bezüglich einer Richtung des Lichtstrahls zwischen der Behälteraufnahme 14 und dem Sensor 20 angeordnet. Die Abdeckung 26 kann einen Abschnitt einer lichtempfindlichen Sensorfläche des Sensors 20 abdecken bzw. abschatten. Beispielsweise kann die Abdeckung 26 ein Durchgangsloch zum Passieren des Lichtstrahls aufweisen.

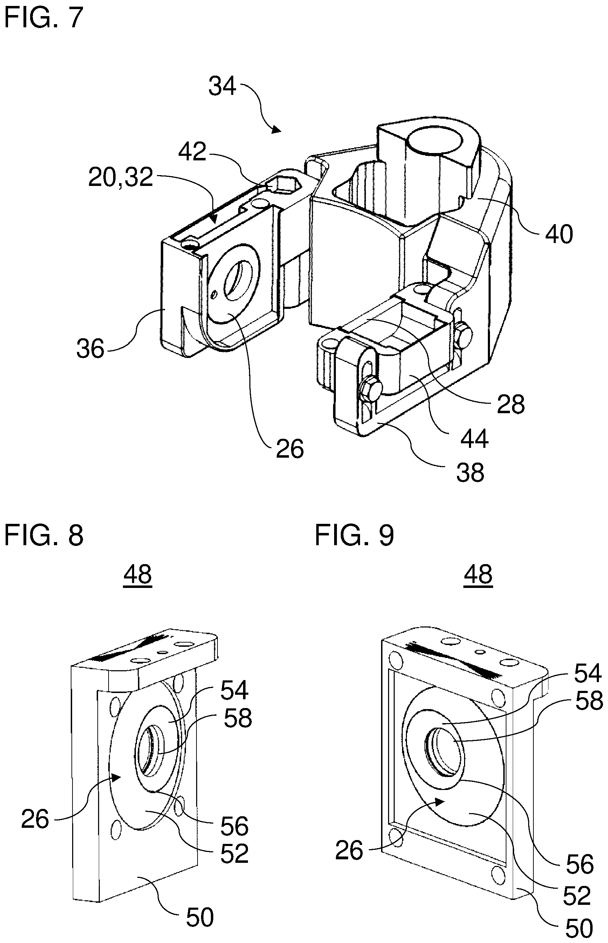

Die Abdeckung 26 kann vorzugsweise verstellbar sein, sodass ein von der Abdeckung 26 verdeckter Abschnitt der lichtempfindlichen Sensorfläche des Sensors 20 veränderbar ist. Bevorzugt ist die Abdeckung 26 bewegbar, z. B. verschiebbar, verschwenkbar und/oder drehbar, relativ zu dem Sensor 20. Beispielsweise kann die Abdeckung 26 eine erste drehbare Scheibe, in der eine zweite Scheibe mit einem Durchgangsloch für den Lichtstahl drehbar gelagert ist, aufweisen, wie beispielhaft unter Bezugnahme auf die Figuren 8 bis 10 hierin beschrieben ist.

Die Lichtquellen-Schutzscheibe 28 ist bezüglich einer Richtung des Lichtstrahls zwischen der Lichtquelle 18 und der Behälteraufnahme 14 angeordnet. Die Lichtquellen-Schutzscheibe 28 ist bevorzugt bruchsicher und/oder kratzunempfindlich. Die Lichtquellen-Schutzscheibe 28 kann die Lichtquelle 18 vor Behälterbruchstücken schützen, wenn der Behälter 12 in der Behälteraufnahme 14 bricht, z. B. bei einer Druckbefüllung mittels der Fülleinrichtung 16.

Die Sensor-Schutzscheibe 30 ist bezüglich einer Richtung des Lichtstrahls zwischen der Behälteraufnahme 14 und dem Sensor 20 angeordnet. Die Sensor-Schutzscheibe 30 ist bevorzugt bruchsicher und/oder kratzunempfindlich. Die Sensor-Schutzscheibe 30 kann den Sensor 20, die Abdeckung 26 und/oder den optischen Filter 32 vor Behälterbruchstücken schützen, wenn der Behälter 12 in der Behälteraufnahme 14 bricht, z. B. bei einer Druckbefüllung mittels der Fülleinrichtung 16.

Der optische Filter 32 ist bezüglich einer Richtung des Lichtstrahls zwischen der Behälteraufnahme 14 und dem Sensor 20 angeordnet. Der optische Filter 32 ist zum teilweisen oder vollständigen Herausfiltern von einfallendem Licht ausgebildet. Vorzugsweise kann der optische Filter 32 Wellenlängenbereiche aus dem einfallenden Licht herausfiltern (z. B. absorbieren oder reflektieren), die dem vorbestimmten Wellenlängenbereich des Lichtstrahls von der Lichtquelle 18 nicht entsprechen. Bevorzugt kann der optische Filter 32 im Wesentlichen alle Wellenlängenbereiche außer dem vorbestimmten Wellenlängenbereich des Lichtstrahls der Lichtquelle 18 aus dem einfallenden Licht herausfiltern. Der optische Filter 32 kann vorzugsweise als ein Bandpassfilter und/oder ein Polarisationsfilter ausgeführt sein. Besonders bevorzugt kann der optische Filter 32 nur durchlässig für die Wellenlänge(n) des Lichtstrahls der Lichtquelle 18 sein.

Bevorzugt kann die Abdeckung 26, die Sensor-Schutzscheibe 30 und/oder der optische Filter 32 mit dem Sensor 20 verbunden sein. Sofern der Sensor 20 sich mit der Behälteraufnahme 14 mitbewegt, bewegt sich die Abdeckung 26, die Sensor-Schutzscheibe 30 und/oder der optische Filter 32 vorzugsweise mit dem Sensor 20 mit.

Es ist möglich, dass der optische Filter 32 in die Abdeckung 26 und/oder die Sensor-Schutzscheibe 30 integriert ist. Es ist auch möglich, dass der optische Filter 32, die Abdeckung 26 und/oder die Sensor-Schutzscheibe 30 separat voneinander ausgebildet sind.

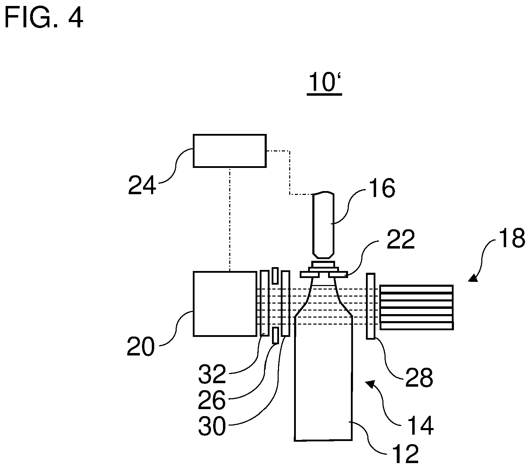

Die Figur 4 zeigt eine modifizierte Vorrichtung 10'.

Die Vorrichtung 10' weist mehrere Lichtquellen 18 auf. Die Lichtquellen 18 sind vertikal versetzt zueinander angeordnet. Es ist möglich, dass die Lichtquellen 18 entlang einer gesamten Höhe der Behälteraufnahme 14 angeordnet sind, oder bspw. nur in einer oberen Hälfte, einem oberen Drittel oder einem oberen Viertel der Behälteraufnahme 14.

Der Sensor 20 kann bspw. als ein Sensorstreifen ausgeführt sein, der die jeweiligen Lichtstrahlen der Lichtquellen 18 empfängt, wenn diese zuvor von der Flüssigkeit im Behälter 12 gebrochen wurden. Der Sensor 20 kann mit einer durchgehenden lichtempfindlichen Sensorfläche ausgeführt sein. Alternativ kann der Sensor 20 bspw. mehrere vertikal versetzt angeordnete lichtempfindliche Sensorflächen oder Einzelsensoren aufweisen.

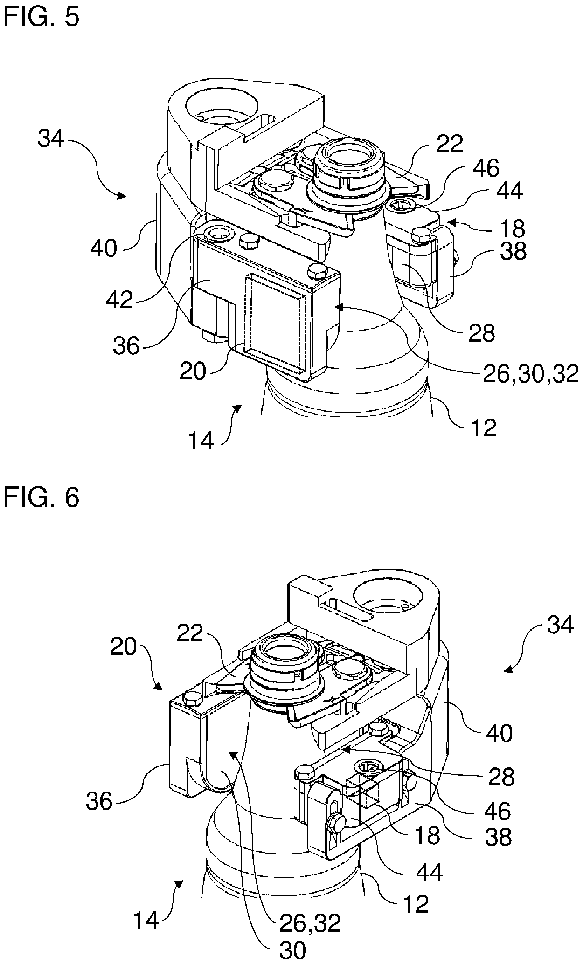

Die Figuren 5 bis 7 zeigen Teile eines Ausführungsbeispiels der Vorrichtung 10.

Ein Grundgestell 34 trägt die Lichtquelle 18, den Sensor 20 und die Behälterhalterung 22. Zusätzlich kann das Grundgestell 34 die Abdeckung 26, die Lichtquellen-Schutzscheibe 28, die Sensor-Schutzscheibe 30 und den optischen Filter 32 tragen, wenn vorhanden und/oder gewünscht. Es ist auch möglich, dass das Grundgestell 34 nur eines oder einige von Lichtquelle 18, Sensor 20, Behälterhalterung 22, Abdeckung 26, Lichtquellen-Schutzscheibe 28, Sensor-Schutzscheibe 30 und optischen Filter 32 trägt.

Das Grundgestell 34 kann in einer Draufsicht bspw. im Wesentlichen eine U-Form aufweisen. Die U-Form kann durch zwei im Wesentlichen parallele Außenschenkel 36, 38 und einen Mittelschenkel 40 gebildet sein. Es ist möglich, dass mindestens einer der beiden Außenschenkel 36, 38 bewegbar mit dem Mittelschenkel 40 verbunden ist. Im Ausführungsbeispiel ist beispielhaft der erste Außenschenkel 36 verschwenkbar mit dem Mittelschenkel 40 verbunden. Prinzipiell kann das Grundgestell 34 allerdings auch jegliche andere geeignete Form aufweisen.

Der Sensor 20, die Abdeckung 26, die Sensor-Schutzscheibe 30 und/oder der optische Filter 32 können an dem ersten Außenschenkel 36 angeordnet sein. Bspw. kann der erste Außenschenkel 36 jeweils eine bevorzugt spaltförmige Aufnahme für den Sensor 20, die Abdeckung 26, die Sensor-Schutzscheibe 30 und/oder den optischen Filter 32 aufweisen.

Der erste Außenschenkel 36 kann einen elektrischen Anschluss 42 aufweisen. Der elektrische Anschluss 42 ist mit dem Sensor 20 verbunden. An den elektrischen Anschluss 42 ist ein Signalkabel (nicht dargestellt) anschließbar, mit dem der Sensor 20 mit der Steuereinheit 24 (siehe Figur 1) verbunden werden kann. Der elektrische Anschluss 42 kann bspw. auf einer Oberseite des ersten Außenschenkels 36 angeordnet sein.

Die Lichtquelle 18 und die Lichtquellen-Schutzscheibe 28 können an dem zweiten Außenschenkel 38 angeordnet sein. Bspw. kann der zweite Außenschenkel 38 einen höhenverstellbaren Schlitten 44 aufweisen, der die Lichtquelle 18 und/oder die Lichtquellen-Schutzscheibe 28 aufnehmen kann.

Der zweite Außenschenkel 38 kann einen elektrischen Anschluss 46 aufweisen. Der elektrische Anschluss 46 ist mit der Lichtquelle 18 verbunden. An den elektrischen Anschluss 46 ist ein elektrisches Versorgungskabel (nicht dargestellt) anschließbar, durch den die Lichtquelle 18 mit elektrischer Energie versorgt werden kann. Der elektrische Anschluss 46 kann bspw. auf einer Oberseite des zweiten Außenschenkels 38 angeordnet sein.

Die Behälterhalterung 22, die vorzugsweise als Behälterhalsklammer ausgebildet ist, kann an dem Mittelschenkel 40 angeordnet sein. Bevorzugt ist die Behälterhalterung 22 auf einer Oberseite des Mittelschenkels 40 angeordnet.

Die Figuren 8 bis 10 zeigen eine beispielhafte Baugruppe 48, in der die Abdeckung 26 und der optische Filter 32 aufgenommen werden können. Es ist möglich, dass die Baugruppe 48 an dem ersten Außenschenkeln 36 des Grundgestells 34 montierbar ist.

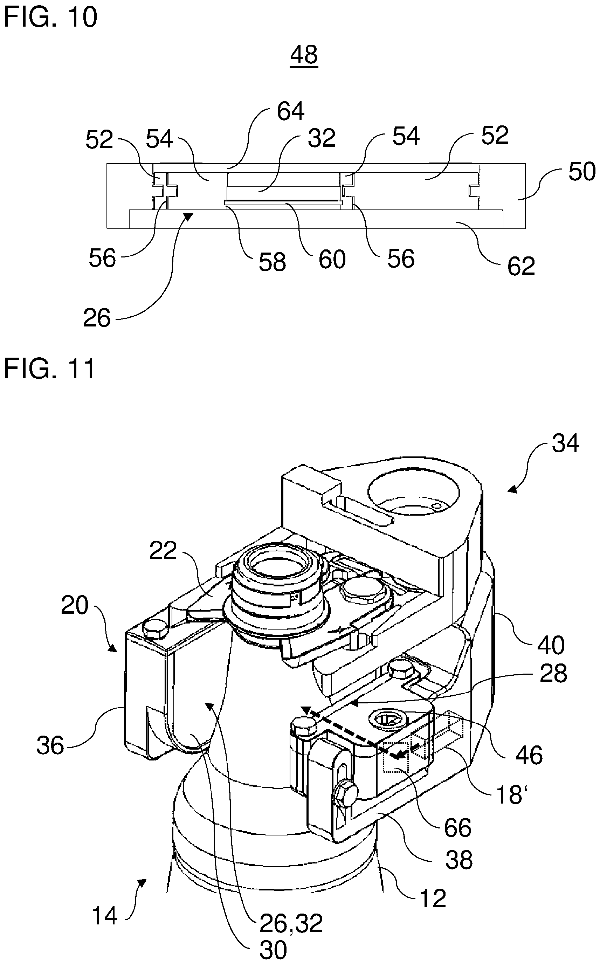

Die Baugruppe 48 weist einen Rahmen 50 auf. In dem Rahmen 50 ist die Abdeckung 26 aufgenommen. Die Abdeckung 26 weist eine erste Scheibe 52 und eine zweite Scheibe 54 auf. Die Scheibe 52 ist bevorzugt kreisförmig. Die Scheibe 52 ist lichtundurchlässig. Die Scheibe 52 ist drehbar in dem Rahmen 50 gelagert. Die Scheibe 52 weist ein exzentrisch angeordnetes Durchgangsloch 56 auf. In dem Durchgangsloch 56 ist die zweite Scheibe 54 drehbar gelagert. Die Scheibe 54 ist bevorzugt kreisförmig. Die Scheibe 54 ist lichtundurchlässig. Die Scheibe 54 weist ein exzentrisch angeordnetes Durchgangsloch 58 auf. Durch das Durchgangsloch 58 kann der Lichtstrahl die Abdeckung 26 passieren. In dem Durchgangsloch 58 kann der optische Filter 32 angeordnet werden, wenn gewünscht (siehe Figur 10). Bspw. kann der optische Filter 32 mittels eines Sicherungsrings 60 in dem Durchgangsloch 58 gesichert sein. Es ist möglich, dass die Abdeckung 26 mit den zwei Scheiben 52, 54 in anderen Konfigurationen genutzt wird (siehe Figuren 1 bis 4), die die Baugruppe 48 sonst nicht aufweisen.

Der Rahmen 50 kann ferner noch eine Aufnahme 62 für den Sensor 20 (nicht dargestellt) und/oder eine Aufnahme 64 für die Sensor-Schutzscheibe 30 (nicht dargestellt) aufweisen.

Die Figur 11 zeigt ein gegenüber den Figuren 5 bis 7 modifiziertes Ausführungsbeispiel.

Die Lichtquelle 18' weist einen länglichen Körper auf, dessen Längsachse im Wesentlichen parallel zu einer Längsachse des zweiten Außenschenkels 38 verläuft. Die Lichtquelle 18' kann zumindest teilweise an dem Mittelschenkel 40 und/oder dem zweiten Außenschenkel 38 angeordnet sein.

Ein Umlenkspiegel 66 lenkt den Lichtstrahl von der Lichtquelle 18' zu der Behälteraufnahme 14 um, z. B. in einem Bereich zwischen 30° und 150°, besonders bevorzugt um rund 90°. Der Umlenkspielgel 66 kann an dem zweiten Außenschenkel 38 angeordnet sein.

Alle Bereichsangaben hierin sind derart offenbart zu verstehen, dass gleichsam alle in den jeweiligen Bereich fallenden Werte einzeln offenbart sind, z. B. auch als jeweils bevorzugte engere Außengrenzen des jeweiligen Bereichs.

### Bezugszeichenliste

- 10: Vorrichtung
- 12: Behälter
- 14: Behälteraufnahme
- 16: Fülleinrichtung
- 18: Lichtquelle
- 20: Lichtempfindlicher Sensor
- 22: Behälterhalterung
- 24: Steuereinheit
- 26: Abdeckung
- 28: Lichtquellen-Schutzscheibe
- 30: Sensor-Schutzscheibe
- 32: Optischer Filter
- 34: Grundgestell
- 36: Erster Außenschenkel
- 38: Zweiter Außenschenkel
- 40: Mittelschenkel
- 42: Elektrischer Anschluss
- 44: Höhenverstellbarer Schlitten
- 46: Elektrischer Anschluss
- 48: Baugruppe
- 50: Rahmen
- 52: Scheibe
- 54: Scheibe
- 56: Durchgangsloch
- 58: Durchgangsloch
- 60: Sicherungsring
- 62: Aufnahme
- 64: Aufnahme
- 66: Umlenkspiegel

## Patentansprüche

1. Vorrichtung (10) zur Füllstandüberwachung von Behältern (12) für eine Behälterbehandlungsanlage, wobei die Vorrichtung (10) aufweist:
eine Behälteraufnahme (14) zum Aufnehmen eines Behälters (12);
eine Fülleinrichtung (16), die zum Befüllen eines in der Behälteraufnahme (14) aufgenommenen Behälters (12) mit einer Flüssigkeit angeordnet ist;
eine Lichtquelle (18) zum Ausstrahlen eines Lichtstrahls zum Passieren eines in der Behälteraufnahme (14) aufgenommenen Behälters (12); und
einen lichtempfindlichen Sensor (20), der angeordnet ist, den Lichtstrahl nur dann zu empfangen, wenn die Flüssigkeit in dem Behälter (12) einen Füllstand hat, bei dem der Lichtstrahl beim Passieren des Behälters (12) durch die Flüssigkeit in dem Behälter (12) gebrochen wurde,
**dadurch gekennzeichnet, dass**
die Lichtquelle (18) und/oder der lichtempfindliche Sensor (20) verstellbar ist, nämlich hin zu und weg von der Behälteraufnahme (14) verschwenkbar.

2. Vorrichtung (10) nach Anspruch 1, ferner aufweisend:
eine Abdeckung (26), die einen Abschnitt einer lichtempfindlichen Sensorfläche des lichtempfindlichen Sensors (20) verdeckt, wobei vorzugsweise die Abdeckung (26) zum Verändern des verdeckten Abschnitts verstellbar, bevorzugt bewegbar, ist.

3. Vorrichtung (10) nach Anspruch 2, wobei die Abdeckung (26) aufweist:
eine erste Scheibe (52), die drehbar gelagert ist und ein erstes Durchgangsloch (56), das exzentrisch in der ersten Scheibe (52) angeordnet ist, aufweist; und
eine zweite Scheibe (54), die drehbar in dem ersten Durchgangsloch (56) gelagert ist und ein zweites Durchgangsloch (58), das exzentrisch in der zweiten Scheibe (54) zum Durchlassen des Lichtstrahls angeordnet ist, aufweist.

4. Vorrichtung (10) nach einem der vorherigen Ansprüche, ferner aufweisend:
eine Lichtquellen-Schutzscheibe (28), die zwischen der Lichtquelle (18) und der Behälteraufnahme (14) angeordnet und zum Schützen der Lichtquelle (18) vor Behälterbruchstücken bei einem Behälterbruch in der Behälteraufnahme (14) ausgebildet ist; und/oder
eine Sensor-Schutzscheibe (30), die zwischen dem lichtempfindlichen Sensor (20) und der Behälteraufnahme (14) angeordnet und zum Schützen des lichtempfindlichen Sensors (20) vor Behälterbruchstücken bei einem Behälterbruch in der Behälteraufnahme (14) ausgebildet ist.

5. Vorrichtung (10) nach einem der vorherigen Ansprüche, wobei:
die Lichtquelle (18) dazu ausgebildet ist, den Lichtstrahl in einem vorbestimmten Wellenlängenbereich auszustrahlen; und
die Vorrichtung (10) ferner einen optischen Filter (32), vorzugsweise Bandpassfilter und/oder Polarisationsfilter, aufweist, der zwischen der Behälteraufnahme (14) und dem lichtempfindlichen Sensor (20) angeordnet und zum, vorzugsweise teilweisen oder vollständigen, Herausfiltern von einem Licht-Wellenlängenbereich außerhalb des vorbestimmten Wellenlängenbereichs ausgebildet ist.

6. Vorrichtung (10) nach Anspruch 5 und mindestens einem der Ansprüche 2 bis 4, wobei:
der optische Filter (32) in der Abdeckung (26) und/oder in der Sensor-Schutzscheibe (30) integriert ist.

7. Vorrichtung (10) nach einem der vorherigen Ansprüche, wobei:
die Lichtquelle (18) und/oder der lichtempfindliche Sensor (20) höhenverstellbar ist.

8. Vorrichtung (10) nach einem der vorherigen Ansprüche, ferner aufweisend:
ein Grundgestell (34), das die Lichtquelle (18) und den lichtempfindlichen Sensor (20) gemeinsam trägt.

9. Vorrichtung (10) nach Anspruch 8, wobei:
das Grundgestell (34) einen ersten Außenschenkel (36), einen zweiten Außenschenkel (38) und einen Mittelschenkel (40) aufweist, wobei vorzugsweise der erste Außenschenkel (36), der zweite Außenschenkel (38) und der Mittelschenkel (40) zusammen eine U-Form bilden;
wobei der lichtempfindliche Sensor (20) an dem ersten Außenschenkel (36) angeordnet ist und die Lichtquelle (18) an mindestens einem von dem zweiten Außenschenkel (38) und dem Mittelschenkel (40) angeordnet ist

10. Vorrichtung (10) nach Anspruch 9, wobei:
der erste Außenschenkel (36) und/oder der zweite Außenschenkel (38) bewegbar, vorzugsweise verschwenkbar, mit dem Mittelschenkel (40) verbunden ist.

11. Vorrichtung (10) nach einem der vorherigen Ansprüche, ferner aufweisend:
einen Umlenkspiegel (66), der angeordnet ist, den von der Lichtquelle (18) ausgestrahlten Lichtstrahl in einer Richtung zu der Behälteraufnahme (14) umzulenken, vorzugsweise in einem Bereich zwischen 30° und 150°, besonders bevorzugt um rd. 90°.

12. Vorrichtung (10) nach Anspruch 11 und einem der Ansprüche 9 oder 10, wobei:
der Umlenkspiegel (66) an dem zweiten Außenschenkel (38) angeordnet ist; und
die Lichtquelle (18) einen länglichen Körper aufweist, dessen Längsachse im Wesentlichen parallel zu einer Längsachse des zweiten Außenschenkels (38) verläuft, und/oder die Lichtquelle (18) zumindest teilweise an dem Mittelschenkel (40) angeordnet ist.

13. Vorrichtung (10) nach einem der vorherigen Ansprüche, mit mindestens einem der nachfolgenden Merkmale:
der lichtempfindliche Sensor (20) und die Lichtquelle (18) sind im Wesentlichen auf gleicher Höhe angeordnet;
der lichtempfindliche Sensor (20) und die Lichtquelle (18) sind auf einander gegenüberliegenden Seiten der Behälteraufnahme (14) angeordnet;
die Vorrichtung (10) weist ferner eine Steuereinheit (24) auf, die dazu ausgebildet ist, ein Befüllen des Behälters (12) mittels der Fülleinrichtung (16) zu beenden, wenn die Steuereinheit (24) von dem lichtempfindlichen Sensor (20) ein Signal empfängt, das angibt, dass der Lichtstrahl von dem lichtempfindlichen Sensor (20) empfangen wurde; und
die Vorrichtung (10) ist in einem Füllerkarussell zum Befüllen von Behältern (12) umfasst.

14. Verfahren zur Füllstandüberwachung von Behältern (12) für eine Behälterbehandlungsanlage mittels einer Vorrichtung (10) nach einem der vorherigen Ansprüche, wobei das Verfahren aufweist:
Füllen eines Behälters (12) mit einer Flüssigkeit;
Ausstrahlen eines Lichtstahls, der den Behälter (12) passiert, während des Füllens;
Empfangen des ausgestrahlten Lichtstahls mittels eines lichtempfindlichen Sensors (20) nur dann, wenn die Flüssigkeit in dem Behälter (12) einen Füllstand hat, bei dem der ausgestrahlte Lichtstrahl beim Passieren des Behälters (12) durch die Flüssigkeit in dem Behälter (12) gebrochen wurde, während des Füllens; und
Beenden des Füllens, wenn der ausgestrahlte Lichtstahl empfangen wurde.

15. Verfahren nach Anspruch 14, wobei das Verfahren mindestens eines der nachfolgenden Merkmale aufweist:
Verdecken eines Abschnitts einer lichtempfindlichen Sensorfläche des lichtempfindlichen Sensors (20), und vorzugsweise Verändern des verdeckten Abschnitts;
Schützen des lichtempfindlichen Sensors (20) vor Behälterbruchstücken bei einem Behälterbruch des Behälters (12);
Filtern von auf den lichtempfindlichen Sensor (20) einstrahlendem Licht, wobei Licht-Wellenlängenbereiche, vorzugsweise teilweise oder vollständig, herausgefiltert werden, die außerhalb eines Wellenlängenbereichs des ausgestrahlten Lichtstrahls sind; und
Umlenken des ausgestrahlten Lichtstrahls mittels eines Umlenkspiegels (66) vor dem Passieren des Behälters (12).

## Claims

1. An apparatus (10) for monitoring the fill level of containers (12) for a container treatment system, wherein the apparatus (10) comprises:
a container receptacle (14) for receiving a container (12);
a filling device (16) which is arranged to fill a container (12) received in the container receptacle (14) with a liquid;
a light source (18) for emitting a light beam for passing through a container (12) received in the container receptacle (14); and
a light-sensitive sensor (20) which is arranged to receive the light beam only when the liquid in the container (12) has a fill level at which the light beam was refracted by the liquid in the container (12) when passing through the container (12),
**characterized in that**
the light source (18) and/or the light-sensitive sensor (20) is adjustable, namely pivotable towards and away from the container receptacle (14).

2. The apparatus (10) according to claim 1, further comprising:
a cover (26) which covers a portion of a light-sensitive sensor surface of the light-sensitive sensor (20), wherein preferably the cover (26) is adjustable, preferably movable, to change the covered portion.

3. The apparatus (10) according to claim 2, wherein the cover (26) has:
a first disk (52) which is rotatably mounted and has a first through-hole (56) which is arranged eccentrically in the first disk (52); and
a second disk (54) which is rotatably mounted in the first through-hole (56) and has a second through-hole (58) which is arranged eccentrically in the second disk (54) for allowing the light beam to pass through.

4. The apparatus (10) according to any of the preceding claims, further comprising:
a light-source protective disk (28) which is arranged between the light source (18) and the container receptacle (14) and is structured to protect the light source (18) from container fragments in the event of a container breakage in the container receptacle (14); and/or
a sensor protective disk (30) which is arranged between the light-sensitive sensor (20) and the container receptacle (14) and is structured to protect the light-sensitive sensor (20) from container fragments in the event of a container breakage in the container receptacle (14).

5. The apparatus (10) according to any of the preceding claims, wherein:
the light source (18) is structured to emit the light beam in a predetermined wavelength range; and
the apparatus (10) further comprises an optical filter (32), preferably a bandpass filter and/or a polarization filter, which is arranged between the container receptacle (14) and the light-sensitive sensor (20) and is structured to filter out, preferably partially or completely, a light wavelength range outside the predetermined wavelength range.

6. The apparatus (10) according to claim 5 and at least one of claims 2 to 4, wherein:
the optical filter (32) is integrated in the cover (26) and/or in the sensor protective disk (30).

7. The apparatus (10) according to any of the preceding claims, wherein:
the light source (18) and/or the light-sensitive sensor (20) is height-adjustable.

8. The apparatus (10) according to any of the preceding claims, further comprising:
a base frame (34) which jointly supports the light source (18) and the light-sensitive sensor (20).

9. The apparatus (10) according to claim 8, wherein:
the base frame (34) has a first outer leg (36), a second outer leg (38) and a middle leg (40), wherein preferably the first outer leg (36), the second outer leg (38) and the middle leg (40) together form a U shape;
wherein the light-sensitive sensor (20) is arranged on the first outer leg (36) and the light source (18) is arranged on at least one of the second outer leg (38) and the middle leg (40)

10. The apparatus (10) according to claim 9, wherein:
the first outer leg (36) and/or the second outer leg (38) is movably, preferably pivotably, connected to the middle leg (40).

11. The apparatus (10) according to any of the preceding claims, further comprising:
a deflection mirror (66) which is arranged to deflect the light beam emitted by the light source (18) in a direction towards the container receptacle (14), preferably in a range between 30° and 150°, particularly preferably by around 90°.

12. The apparatus (10) according to claim 11 and any of claims 9 or 10, wherein:
the deflection mirror (66) is arranged on the second outer leg (38); and
the light source (18) has an elongate body, the longitudinal axis of which runs substantially in parallel with a longitudinal axis of the second outer leg (38), and/or the light source (18) is at least partially arranged on the middle leg (40).

13. The apparatus (10) according to any of the preceding claims, comprising at least one of the following features:
the light-sensitive sensor (20) and the light source (18) are arranged substantially at the same height;
the light-sensitive sensor (20) and the light source (18) are arranged on opposite sides of the container receptacle (14);
the apparatus (10) further comprises a control unit (24) which is configured to terminate filling of the container (12) by the filling device (16) when the control unit (24) receives a signal from the light-sensitive sensor (20) indicating that the light beam was received by the light-sensitive sensor (20); and
the apparatus (10) is included in a filling carousel for filling containers (12).

14. A method for monitoring the fill level of containers (12) for a container treatment system via an apparatus (10) according to any of the preceding claims, wherein the method comprises:
Filling a container (12) with a liquid;
Emitting a light beam which passes through the container (12) during filling;
Receiving the emitted light beam via a light-sensitive sensor (20) only when the liquid in the container (12) has a fill level at which the emitted light beam was refracted by the liquid in the container (12) when passing through the container (12) during filling; and
Terminating the filling when the emitted light beam has been received.

15. The method according to claim 14, wherein the method has at least one of the following features:
Covering a portion of a light-sensitive sensor surface of the light-sensitive sensor (20), and preferably modifying the covered portion;
Protecting the light-sensitive sensor (20) from container fragments in the event of a container breakage of the container (12);
Filtering light incident on the light-sensitive sensor (20), wherein light wavelength ranges that are outside a wavelength range of the emitted light beam are preferably partially or completely filtered out; and
Deflecting the emitted light beam via a deflection mirror (66) before the passage through the container (12).

## Revendications

1. Dispositif (10) pour la surveillance du niveau de remplissage de récipients (12) pour une installation de traitement de récipients, dans lequel le dispositif (10) présente :
un réceptacle pour récipient (14) destiné à recevoir un récipient (12) ;
un appareil de remplissage (16) qui est disposé pour remplir d'un liquide un récipient (12) reçu dans le réceptacle pour récipient (14) ;
une source lumineuse (18) permettant d'émettre un faisceau lumineux destiné à passer à travers un récipient (12) reçu dans le réceptacle pour récipient (14) ; et
un capteur photosensible (20) qui est disposé pour recevoir le faisceau lumineux uniquement lorsque le liquide dans le récipient (12) possède un niveau de remplissage auquel le faisceau lumineux a été réfracté par le liquide dans le récipient (12) lors du passage dudit faisceau lumineux à travers le récipient (12),
**caractérisé en ce que**
la source lumineuse (18) et/ou le capteur photosensible (20) sont réglables, à savoir qu'ils peuvent pivoter en direction du réceptacle pour récipient (14) et à l'écart de celui-ci.

2. Dispositif (10) selon la revendication 1, présentant en outre :
un élément de recouvrement (26) qui recouvre une section d'une surface de capteur photosensible du capteur photosensible (20), dans lequel, de préférence, l'élément de recouvrement (26) est réglable, de préférence est mobile, pour modifier la section recouverte.

3. Dispositif (10) selon la revendication 2, dans lequel l'élément de recouvrement (26) présente :
un premier disque (52) qui est monté de manière à pouvoir tourner et présente un premier trou traversant (56) disposé de manière excentrique dans le premier disque (52) ; et
un second disque (54) qui est monté de manière à pouvoir tourner dans le premier trou traversant (56) et présente un second trou traversant (58) disposé de manière excentrique dans le second disque (54) pour laisser passer le faisceau lumineux.

4. Dispositif (10) selon l'une des revendications précédentes, présentant en outre :
une vitre de protection de source lumineuse (28) qui est disposée entre la source lumineuse (18) et le réceptacle pour récipient (14) et qui est conçue pour protéger la source lumineuse (18) de morceaux de récipient en cas de bris du récipient dans le réceptacle pour récipient (14) ; et/ou
une vitre de protection de capteur (30) qui est disposée entre le capteur photosensible (20) et le réceptacle pour récipient (14) et qui est conçue pour protéger le capteur photosensible (20) de morceaux de récipient en cas de bris du récipient dans le réceptacle pour récipient (14).

5. Dispositif (10) selon l'une des revendications précédentes, dans lequel :
la source lumineuse (18) est conçue pour émettre le faisceau lumineux dans une plage de longueurs d'onde prédéterminée ; et
le dispositif (10) présente en outre un filtre optique (32), de préférence un filtre passe-bande et/ou un filtre de polarisation, qui est disposé entre le réceptacle pour récipient (14) et le capteur photosensible (20) et qui est configuré pour filtrer, de préférence partiellement ou totalement, une plage de longueurs d'onde de lumière en dehors de la plage de longueurs d'onde prédéterminée.

6. Dispositif (10) selon la revendication 5 et au moins l'une des revendications 2 à 4, dans lequel :
le filtre optique (32) est intégré dans l'élément de recouvrement (26) et/ou dans la vitre de protection de capteur (30).

7. Dispositif (10) selon l'une des revendications précédentes, dans lequel :
la source lumineuse (18) et/ou le capteur photosensible (20) sont réglables en hauteur.

8. Dispositif (10) selon l'une des revendications précédentes, présentant en outre :
un châssis de base (34) qui supporte conjointement la source lumineuse (18) et le capteur photosensible (20).

9. Dispositif (10) selon la revendication 8, dans lequel :
le châssis de base (34) présente une première branche extérieure (36), une seconde branche extérieure (38) et une branche centrale (40), dans lequel, de préférence, la première branche extérieure (36), la seconde branche extérieure (38) et la branche centrale (40) forment conjointement une forme en U ;
dans lequel le capteur photosensible (20) est disposé sur la première branche extérieure (36) et la source lumineuse (18) est disposée sur au moins l'une parmi la seconde branche extérieure (38) et la branche centrale (40)

10. Dispositif (10) selon la revendication 9, dans lequel :
la première branche extérieure (36) et/ou la seconde branche extérieure (38) sont reliées de manière mobile, de préférence de manière à pouvoir pivoter, à la branche centrale (40).

11. Dispositif (10) selon l'une des revendications précédentes, présentant en outre :
un miroir de déviation (66) qui est disposé pour dévier le faisceau lumineux émis par la source lumineuse (18) dans une direction vers le réceptacle pour récipient (14), de préférence dans une plage comprise entre 30° et 150°, de manière particulièrement préférée d'environ 90°.

12. Dispositif (10) selon la revendication 11 et l'une des revendications 9 ou 10, dans lequel :
le miroir de déviation (66) est disposé sur la seconde branche extérieure (38) ; et
la source lumineuse (18) présente un corps allongé dont l'axe longitudinal s'étend sensiblement parallèlement à un axe longitudinal de la seconde branche extérieure (38), et/ou la source lumineuse (18) est disposée au moins partiellement sur la branche centrale (40).

13. Dispositif (10) selon l'une des revendications précédentes, comportant au moins l'une des caractéristiques suivantes :
le capteur photosensible (20) et la source lumineuse (18) sont disposés sensiblement à la même hauteur ;
le capteur photosensible (20) et la source lumineuse (18) sont disposés sur des côtés opposés l'un à l'autre du réceptacle pour récipient (14) ;
le dispositif (10) présente en outre une unité de commande (24) qui est configurée pour arrêter un remplissage du récipient (12) au moyen de l'appareil de remplissage (16) lorsque l'unité de commande (24) reçoit en provenance du capteur photosensible (20) un signal qui indique que le faisceau lumineux a été reçu par le capteur photosensible (20) ; et
le dispositif (10) est compris dans un carrousel de remplissage permettant de remplir des récipients (12).

14. Procédé pour la surveillance du niveau de remplissage de récipients (12) pour une installation de traitement de récipients au moyen d'un dispositif (10) selon l'une des revendications précédentes, dans lequel le procédé présente :
le remplissage d'un récipient (12) d'un liquide ;
l'émission d'un faisceau lumineux qui passe à travers le récipient (12) pendant le remplissage ;
la réception du faisceau lumineux émis au moyen d'un capteur photosensible (20) uniquement lorsque le liquide dans le récipient (12) possède un niveau de remplissage auquel le faisceau lumineux émis a été réfracté par le liquide dans le récipient (12) lors du passage dudit faisceau lumineux à travers le récipient (12), pendant le remplissage ; et
l'arrêt du remplissage lorsque le faisceau lumineux émis a été reçu.

15. Procédé selon la revendication 14, dans lequel le procédé présente au moins l'une des caractéristiques suivantes :
recouvrement d'une section d'une surface de capteur photosensible du capteur photosensible (20), et de préférence modification de la section recouverte ;
protection du capteur photosensible (20) contre des morceaux de récipient en cas de bris de récipient du récipient (12) ;
filtrage de la lumière incidente sur le capteur photosensible (20), dans lequel des plages de longueurs d'onde de lumière, lesquelles sont en dehors d'une plage de longueurs d'onde du faisceau lumineux émis, sont filtrées, de préférence partiellement ou complètement ; et
déviation du faisceau lumineux émis au moyen d'un miroir de déviation (66) avant qu'il ne passe à travers le récipient (12).
